Europäisches Patentamt

European Patent Office

Office européen des brevets

(19)

(11) Veröffentlichungsnummer: **0 195 769**

**A2**

(12) **EUROPÄISCHE PATENTANMELDUNG**

(21) Anmeldenummer: **86890056.4**

(22) Anmeldetag: **11.03.86**

(51) Int. Cl.⁴: **G 01 N 21/03**

(30) Priorität: **18.03.85 AT 809/85**

(43) Veröffentlichungstag der Anmeldung:
**24.09.86 Patentblatt 86/39**

(84) Benannte Vertragsstaaten:
**DE FR GB IT**

(71) Anmelder: **AVL GESELLSCHAFT FÜR VERBRENNUNGSKRAFTMASCHINEN UND MESSTECHNIK MBH.PROF.DR.DR.H.C.HANS LIST**
**Kleiststrasse 48**
**A-8020 Graz(AT)**

(72) Erfinder: **Schiefer, Erich Josef, Dr.**
**Neulassing 17**
**A-8900 Selzthal(AT)**

(72) Erfinder: **List, Helmut, Dipl.-Ing.**
**Bogengasse 36**
**A-8010 Graz(AT)**

(74) Vertreter: **Krause, Walter, Dr. Dipl.-Ing. et al,**
**Postfach 200**
**A-1014 Wien(AT)**

(54) **Küvette zur Messung von Dampf- bzw. Gasspektren.**

(57) Um Kondensation im Bereich der strahlungsdurchlässigen Deckel einer heizbaren Küvette zur Messung von Dampf- bzw. Gasspektrum zu vermeiden, sind separate Heizeinrichtungen im Bereich jedes der Deckel angeordnet, die vorzugsweise auf eine geringfügig über der Temperatur des Probengases liegende Temperatur heizbar sind.

_Fig.1_

EP 0 195 769 A2

Küvette zur Messung von Dampf- bzw. Gasspektren

Die Erfindung betrifft eine Küvette zur Messung von Dampf- bzw. Gasspektren, insbesonders im Infrarotbereich, von bei Raumtemperatur flüssigen oder festen Probensubstanzen, mit einem mit einer Heizeinrichtung versehenen, an zumindest einem Umfangsbereich offenen und mit einem strahlungsdurchlässigen Deckel dicht verschließbaren Küvettenkörper.

Derarte Meßküvetten sind bekannt und werden beispielsweise verwendet zur Untersuchung von Gasen bei erhöhter Temperatur, zur Analyse niedrigsiedender Flüssigkeiten oder zur Untersuchung von Schmelzen von Festkörpern sowie auch von Polymeren bei höheren Temperaturen. Über die Heizeinrichtung können die ins Innere der Küvette eingebrachten Proben bis auf Temperaturen von etwa 200 bis 300° C aufgeheizt werden, wobei die Temperatur während der Messung - beispielsweise mittels Durchstrahlung mit elektromagnetischer Strahlung im Infrarotbereich und Bestimmung der Absorptionsbanden - relativ genau konstant gehalten werden kann.

Ein gravierender Nachteil der bekannten derartigen Küvetten ist darin zu sehen, daß sie zur Messung von Dampfdruckspektren von Flüssigkeiten oder Festkörpern nicht oder aber nur sehr eingeschränkt verwendbar sind, da an den strahlungsdurchlässigen Deckeln Kondensation auftritt, was genaue Messungen unmöglich macht.

Aufgabe der vorliegenden Erfindung ist es, Küvetten der eingangs genannten Art so zu verbessern, daß damit auf einfache und genaue Weise Messungen von Dampf- bzw. Gasspektren von bei Raumtemperatur flüssigen oder festen Probensubstanzen möglich werden und daß insbesonders Kondensation an den strahlungsdurchlässigen Deckeln wirksam vermieden wird.

Dies wird gemäß der Erfindung dadurch erreicht, daß eine weitere, separate Heizeinrichtung an der Küvette im Bereich jedes Deckels angeordnet ist. Auf diese Weise kann leicht sichergestellt werden, daß zumindest die von der Strahlung durchsetzten Bereiche jedes Deckels, von denen natürlich abhängig von der Meßeinrichtung bzw. anderen äußeren Parametern entweder nur einer oder aber mehrere an verschiedenen Stellen vorgesehen sein können, frei von Kondensation gehalten werden.

Gemäß einer bevorzugten Ausgestaltung der Erfindung ist vorgesehen, daß die weitere Heizeinrichtung über eine Einrichtung zur Temperaturregelung verfügt, welche beispielsweise mit Hilfe eines in das Probengas eintauchenden Temperaturfühlers eine, vorzugsweise 0,5 bis $1^\circ$ C, über der Temperatur des Probengases liegende Temperatur des von der Strahlung durchsetzten Bereichs des Deckels sicherstellt. Durch die gegenüber der Temperatur des in der Küvette befindlichen Probengases angehobene Temperatur des strahlungsdurchsetzten Deckelbereichs wird mit Sicherheit jede Kondensation in diesem Bereich verhindert. Andererseits wird durch die vorzugsweise vorgenommene, nur geringfügige Temperaturerhöhung vermieden, daß größere Temperaturgradienten innerhalb der Probe bzw. der Küvette auftreten können, die in nachteiliger Weise zu Konvektionsströmungen innerhalb der Probe führen würden.

Gemäß einer weiteren Ausgestaltung der Erfindung ist vorgesehen, daß die weitere Heizeinrichtung an einem den Deckel mit dem Küvettenkörper verbindenden Halteelement angeordnet ist. Dies ist eine sehr einfache Ausgestaltung, welche es erlaubt, daß die zusätzliche Heizeinrichtung mit jedem der Deckel abnehmbar ist, was die Handhabung der Küvette erleichtert.

In diesem Zusammenhang ist eine weitere Ausgestaltung der Erfindung von besonderem Vorteil, gemäß welcher das Halteelement unter Aussparung eines Fensterbereiches im wesentlichen die gesamte äußere Oberfläche des Deckels übergreift, und mit diesem thermisch in Kontakt steht. Damit kann die Wärmeübertragung von dem die Heizeinrichtung tragenden Halteelement auf den Deckel bzw. den von der Strahlung durchsetzten Bereich desselben verbessert werden. Dabei ist besonders vorteilhaft, wenn das Halteelement aus thermisch gut leitendem Material, vorzugsweise Kupfer oder Aluminium, besteht, da damit der Wärmetransport von der Heizeinrichtung über das Halteelement zum Deckel einfach verbessert werden kann.

Die Erfindung wird im folgenden anhand des in der Zeichnung teilweise schematisch dargestellten Ausführungsbeispiels näher erläutert.

Figur 1 zeigt einen Längsschnitt durch ein Ausführungsbeispiel der Erfindung, und

Figur 2 zeigt eine Ansicht entlang des Pfeiles II in Fig. 1.

Die dargestellte Küvette dient zur Messung von Dampf- bzw. Gasspektren im Infrarotbereich von bei Raumtemperatur flüssigen oder festen Probensubstanzen und besteht im wesentlichen aus einem rohrförmig ausgebildeten Küvettenkörper 1 und zwei an den offenen Umfangsbereichen des Küvettenkörpers 1 aufgesetzten, für die verwendete Strahlung durchlässigen Deckeln 2, welche mittels Halteelementen 3 mit dem Küvettenkörper 1 in Verbindung stehen. Der Küvettenkörper 1 kann dabei beispielsweise aus Edelstahl oder Messing bestehen und ist üblicherweise an seiner Innenfläche 4 zusätzlich beschichtet, beispielsweise mit Gold bedampft. Die Deckel 2 können beispielsweise aus NaCl oder KBr bestehen und sollen für die verwendete Strahlung durchlässig sein bzw. auf alle Fälle keine oder nur sehr schwache Absorptionsbanden im be-

trachteten Frequenzgebiet aufweisen.

Die Halteelemente 3 sind im dargestellten Ausführungsbeispiel an einem umlaufenden Rand 5 mit einem Innengewinde 6 versehen, welches mit einem Außengewinde 7 im Bereich der Öffnungen des Küvettenkörpers 1 zusammenwirkt und damit die Befestigung der Deckel 2 am Küvettenkörper 1 ermöglicht. Zur Abdichtung dienen Dichtungsringe 8 aus elastischem Material; an der den Dichtungsringen 8 gegenüberliegenden Seite der Deckel 2 sind elastische Ringe 9 zwischen den Halteelementen 3 und den Deckeln 2 eingelegt, um eine Beschädigung der Deckel beim Festschrauben mit Sicherheit auszuschließen.

Am Außenumfang des Küvettenkörpers 1 ist eine Heizeinrichtung 10 angeordnet, welche beispielsweise als elektrische Widerstandsheizung ausgeführt sein kann und über Anschlüsse 11 mit einer nur angedeuteten Einrichtung 12 zur Energieversorgung und Temperaturregelung in Verbindung steht. Am Außenumfang der Halteelemente 3 sind weitere, separate Heizeinrichtungen 13 angeordnet, welche beispielsweise ebenfalls als elektrische Widerstandsheizung ausgeführt sein können und über Leitungen 14 mit der Einrichtung 12 zur Energieversorgung und Temperaturregelung in Verbindung stehen. Davon abgesehen könnte aber natürlich auch vorgesehen sein, daß die separaten Heizeinrichtungen 13 mit einer von der Einrichtung 12 unabhängigen weiteren Energieversorgungs- und Regeleinrichtung in Verbindung stehen, bzw. daß alle drei Heizeinrichtungen eigene unabhängige derartige Einrichtungen aufweisen. Zum gleichen Zweck, nämlich zur Ermöglichung einer getrennten Regelung der Temperatur der Heizeinrichtungen - können aber auch innerhalb der gemeinsamen Einrichtung 12 entsprechend getrennte Versorgungs- und Regelkreise vorgesehen werden.

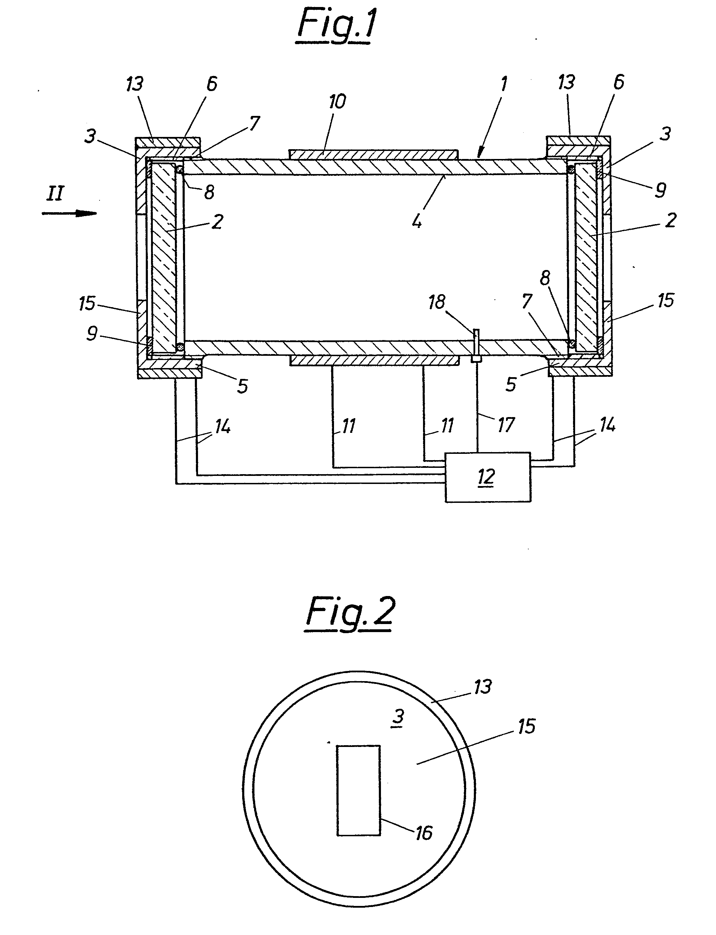

Die in den beiden weiteren Heizeinrichtungen 13 freigesetzte Wärme wird über die Halteelemente 3, welche vorzugsweise aus thermisch gut leitendem Material, wie etwa Kupfer oder Aluminium, bestehen, auf die Deckel 2 übergeleitet, wobei hier darauf hingewiesen werden muß, daß der durch die Ringe 9 bedingte Spalt zwischen der Außenseite 15 der Halteelemente 3 und der äußeren Oberfläche der Deckel 2 etwas übertrieben groß dargestellt ist - soferne es das Material der Deckel 2 zuläßt, könnten diese Ringe 9 aber auch entfallen und somit ein unmittelbarer Kontakt zwischen der Außenseite 15 der Halteelemente 3 und den Deckeln 2 hergestellt werden. Weiters kann auch für die Ringe 9 hohe Temperaturleitfähigkeit aufweisendes elastisches Material verwendet werden. In Fig. 2 ist ersichtlich, daß die Außenseite 15 der Halteelemente 3 unter Aussparung eines Fensterbereiches 16 im wesentlichen die gesamte äußere Oberfläche der Deckel übergreift, was eine große Fläche zur Herstellung des thermischen Kontaktes zwischen den von der separaten Heizeinrichtung 13 erwärmten Halteelementen 3 und den Deckeln 2 ergibt.

Über die Einrichtung 12, der über eine Leitung 17 von einem Temperaturfühler 18 im Inneren des Küvettenkörpers 1 Information über die Probentemperatur zugeführt wird, können die Heizeinrichtungen 10 bzw. 13 so geregelt werden, daß die für den Durchgang der Strahlung zur Verfügung stehenden Bereiche der Deckel 2 - also im Bereich der offenen Fensterbereiche 16 - eine geringfügig über der Temperatur des Probengases liegende Temperatur aufweisen; vorzugsweise beträgt diese Erhöhung der Temperatur etwa 0,5 bis 1° C. Auf diese Weise wird mit Sicherheit vermieden, daß an der Innenfläche der strahlungsdurchlässigen Deckel 2 Kondensation auftritt, die die Absorptionsmessung verfälschen würde.

Abgesehen von der dargestellten Ausbildung mit zwei an gegenüberliegenden Bereichen des Küvettenkörpers 1 vorgesehenen Deckeln wären natürlich auch Ausführungen mit nur einem Deckel oder aber mit mehreren entsprechend angeordneten Deckeln möglich - dies wird im wesentlichen nur von der verwendeten Meßanordnung bestimmt und hat insbesonders auf die Anordnung der zusätzlichen Heizrichtungen keinen Einfluß.

Weiters könnten auch - falls erforderlich - die weiteren Heizeinrichtungen an den Halteelementen 3 größere Bereiche

- 6 -

0195769

derselben überdecken; also etwa auch zumindest einen
Teil der Außenseite 15.

1986 03 05
Kr/Lu/Mü

0195769

P a t e n t a n s p r ü c h e :

1. Küvette zur Messung von Dampf- bzw. Gasspektren, insbesonders im Infrarotbereich, von bei Raumtemperatur flüssigen oder festen Probensubstanzen, mit einem mit einer Heizeinrichtung versehenen, an zumindest einem Umfangsbereich offenen und mit einem strahlungsdurchlässigen Deckel dicht verschließbaren Küvettenkörper, d a d u r c h  g e k e n n z e i c h n e t ,  daß eine weitere, separate Heizeinrichtung (13) an der Küvette im Bereich jedes Deckels (2) angeordnet ist.

2. Küvette nach Anspruch 1, dadurch gekennzeichnet, daß die weitere Heizeinrichtung (13) über eine Einrichtung (12) zur Temperaturregelung verfügt, welche beispielsweise mit Hilfe eines in das Probengas eintauchenden Temperaturfühlers (18), eine, vorzugsweise 0,5 bis $1^{\circ}$ C, über der Temperatur des Probengases liegende Temperatur des von der Strahlung durchsetzten Bereichs des Deckels (2) sicherstellt.

3. Küvette nach Anspruch 1 oder 2, dadurch gekennzeichnet, daß die weitere Heizeinrichtung (13) an einem den Deckel (2) mit dem Küvettenkörper (1) verbindenden Halteelement (3) angeordnet ist.

4. Küvette nach Anspruch 3, dadurch gekennzeichnet, daß das Halteelement (3) unter Aussparung eines Fensterbereiches (16) im wesentlichen die gesamte äußere Oberfläche des Deckels (2) übergreift und mit diesem thermisch in Kontakt steht.

5. Küvette nach Anspruch 3 oder 4, dadurch gekennzeichnet, daß das Halteelement (3) aus thermisch gut leitendem Material, vorzugsweise Kupfer oder Aluminium, besteht.

86 03 05
Kr/Lu/Mü

Fig.1

Fig.2

0195769